# EUROPÄISCHE PATENTANMELDUNG

(11) **EP 3 584 107 A1**
(43) Veröffentlichungstag der Anmeldung: **25.12.2019**
(21) Anmeldenummer: 19179491.6
(22) Anmeldetag: 11.06.2019
(51) Int. Cl.: B60L 3/00, B60L 3/04, B60L 15/32, B60L 15/42, B60L 50/53

(54) **VERBUND AUS FAHRZEUGEN UND VERFAHREN ZUM SPEISEN EINES ELEKTRISCHEN BORDNETZWERKS IN EINEM SOLCHEN VERBUND**

(30) Priorität: 14.06.2018 DE 102018209583
(71) Anmelder: Bombardier Transportation GmbH, 10785 Berlin (DE)
(72) Erfinder: Jansen, Tjorven, 8309 Nürensdorf (CH); Heimberg, Markus, 8154 Oberglatt (CH)
(74) Vertreter: Patentanwälte Bressel und Partner mbB

(57) **Zusammenfassung**

Die Erfindung betrifft einen Verbund (10, 100) aus wenigstens zwei Fahrzeugen (12, 14), die jeweils wenigstens einen Schienenfahrzeug-Zugteilen umfassen, wobei zumindest ein erstes Fahrzeug (12, 14) Folgendes umfasst:
einen aus einer Energiequelle mit elektrischer Energie speisbaren Gleichspannungs-Zwischenkreis (48), an den zumindest ein Motorstromrichter (46) angeschlossen ist, der wiederum elektrisch mit zumindest einer Traktionsmaschine (20) verbunden ist; und
ein mit dem Gleichspannungs-Zwischenkreis (48) elektrisch verbundenes oder
verbindbares Bordnetzwerk (24) zur Versorgung wenigstens eines elektrischen Verbrauchers (44) des ersten Fahrzeugs (12, 14);
wobei der Verbund (10) ferner wenigstens eine Steuereinrichtung (52) umfasst, die dazu ausgebildet Folgendes festzustellen und zu aktivieren:
- Feststellen einer Störung der Speisung des Gleichspannungs-Zwischenkreises (48) des ersten Fahrzeugs (12, 14);
- Aktivieren eines Generatorbetriebs der Traktionsmaschine (20).

Ferner betrifft die Erfindung ein Verfahren zum Speisen eines elektrischen Bordnetzwerks (24) in einem solchen Verbund.

## Beschreibung

Die Erfindung betrifft einen Verbund aus wenigstens zwei Fahrzeugen. Ferner betrifft die Erfindung ein Verfahren zum Speisen eines elektrischen Bordnetzwerks in einem Verbund aus wenigstens zwei Fahrzeugen. Bei dem Verbund handelt es sich im um einen mechanischen Verbund, d.h. es können Zug- und Bremskräfte zwischen den Teilen des Verbundes wirken. Bei den Fahrzeugen (oder aber bei wenigstens einem Fahrzeug des Verbundes) kann es sich allgemein um elektrisch angetriebene Fahrzeuge handeln. Insbesondere können die Fahrzeuge als Schienenfahrzeug-Zugteile ausgebildet sein oder wenigstens einen Schienenfahrzeug-Zugteil umfassen.

Zur Fortbewegung von elektrisch angetriebenen Fahrzeugen und insbesondere elektrisch angetriebenen Schienenfahrzeug-Zugteilen ist es bekannt, dass mehrere Fahrzeuge einen Verbund bilden, im Fall von Schienenfahrzeugen daher einen Zug bilden. Jedes Fahrzeug (oder aber wenigstens ein Fahrzeug des Verbundes) kann dabei über ein eigenes elektrisches Antriebsnetzwerk verfügen, das auch als Traktionsnetzwerk bezeichnet werden kann. Ein Fahrzeug kann in bestimmten Ausführungsformen somit eine in sich abgeschlossene sowie vorzugsweise auch eigenständig antriebsfähige Einheit bilden, die optional auch mehrere Komponenten in Form von Schienenfahrzeug-Zugteilen umfassen kann (zum Beispiel vier oder acht einzelne Wagen). Die Fahrzeuge können allgemein wenigstens einen Schienenfahrzeug-Zugteil umfassen, insbesondere aber eine Mehrzahl hiervon. Im Rahmen der vorliegenden Offenbarung kann unter einem Schienenfahrzeug-Zugteil eine Lokomotive, ein Waggon, ein Mittelwagen und/oder ein Triebwagen verstanden werden. Ein Fahrzeug kann auch einen Teilverbund aus jeglichen der genannten Beispiele umfassen (zum Beispiel ein Teilverbund aus einer Lokomotive und wenigstens einem Waggon/Mittelwagen, ein Teilverbund aus einem Triebwagen und wenigstens einem Waggon/Mittelwagen oder ein Teilverbund aus einer Lokomotive und einem Triebwagen, optional mit wenigstens einem Waggon/Mittelwagen dazwischen). Allgemeiner kann jedes Fahrzeug und jeder Schienenfahrzeug-Zugteil ein beliebiger Teil mit oder ohne Stromabnehmer, Traktionsmotor und/oder Verbrennungsmotor mit elektrischem Generator sein.

Die Antriebsnetzwerke der Fahrzeuge, insbesondere Schienenfahrzeug-Zugteile, dienen allgemein dazu, elektrische Energie, die über eine Energiequelle zum Beispiel in Form einer Oberleitung, einer Stromschiene oder einem per Dieselmotor betriebenen Generator eingespeist wird, in eine Traktion zum Fortbewegen des Fahrzeugs und/oder des Fahrzeugverbundes umzuwandeln.

Weiterhin ist es bekannt, dass neben den Antriebsnetzwerken auch zumindest ein elektrisches Bordnetzwerk vorhanden ist. Dieses kann je nach dem konkreten Anwendungsfall zum Versorgen von Nutzlast- oder Passagierräumen dienen und/oder als Hilfsbetriebenetzwerk bezeichnet werden. Sie können allgemein dazu dienen, elektrische Verbraucher des Fahrzeugs, die typischerweise keine unmittelbaren Komponenten oder Bestandteile des Antriebsnetzwerkes bilden oder von diesem versorgt werden, mit elektrischer Energie zu versorgen.

In der Regel sind diese Bordnetzwerke mit dem Antriebsnetzwerk elektrisch gekoppelt und zwar insbesondere mit einem Gleichspannungs-Zwischenkreis des Antriebsnetzwerks. Dies bedeutet, dass die elektrischen Verbraucher des Bordnetzwerks nur dann mit elektrischer Energie versorgt werden können, wenn in dem Gleichspannungs-Zwischenkreis eine ausreichende elektrische Spannung vorhanden ist. Ist dies nicht der Fall, können die Verbraucher unter Umständen nicht mehr betrieben werden, insbesondere wenn auch ein Energiespeicher nicht mehr in der Lage ist, ausreichend elektrische Energie zu liefern. Im Fall von Fahrzeugen in Form von Schienenfahrzeug-Zugteilen kann dies aus Sicht der Passagiere zu erheblichen Komforteinbußen führen, beispielsweise wenn die Beleuchtung oder Klimatisierung des betroffenen Schienenfahrzeug-Zugteils ausfällt oder Bordbatterien z.B. zur Speisung von diversen Steuerungen nicht nachgeladen werden können.

Aufgabe der vorliegenden Erfindung ist es daher, die Betriebsfähigkeit eines Verbundes aus mehreren Fahrzeugen zu verbessern.

Diese Aufgabe wird durch einen Verbund und ein Verfahren gemäß den beigefügten unabhängigen Ansprüchen gelöst. Vorteilhafte Weiterbildungen sind in den abhängigen Ansprüchen angegeben. Ferner versteht es sich, dass die in der einleitenden Beschreibung erwähnten Merkmale einzeln oder in beliebiger Kombination auch bei der vorliegend offenbarten Lösung vorgesehen sein können, sofern nicht anders angegeben oder ersichtlich.

Die Erfindung schlägt allgemein einen Weg vor, um trotz einer Störung in den elektrischen Netzwerken von einem der Fahrzeuge des Verbundes nach wie vor elektrische Energie bereitzustellen, insbesondere um ein elektrisches Bordnetzwerk dieses Fahrzeugs weiter betreiben zu können. Eine solche Störung kann insbesondere dann vorliegen, wenn die Energieversorgung über eine Oberleitung oder Stromschiene ausfällt. Hierfür kann in dem entsprechend gestörten Fahrzeug ein Generatorbetrieb der Traktionsmaschine oder zumindest einer der Traktionsmaschinen (wenn mehrere vorhanden) aktiviert werden, während das nicht gestörte Fahrzeug eine Fortbewegung für vorzugsweise den gesamten Verbund erzeugt.

Im Detail wird ein Verbund aus wenigstens zwei Fahrzeugen vorgeschlagen, die insbesondere jeweils wenigstens einen Schienenfahrzeug-Zugteil umfassen, wobei zumindest ein erstes Fahrzeug Folgendes umfasst:
- einen aus einer Energiequelle mit elektrischer Energie speisbaren Gleichspannungs-Zwischenkreis, an den zumindest ein Motorstromrichter angeschlossen ist, der wiederum mit zumindest einer Traktionsmaschine (dem Motor) verbunden ist; und
- ein mit dem Gleichspannungs-Zwischenkreis elektrisch verbundenes oder verbindbares Bordnetzwerk zur Versorgung wenigstens eines elektrischen Verbrauchers des ersten Fahrzeugs;
wobei der Verbund ferner wenigstens eine Steuereinrichtung umfasst, die dazu ausgebildet ist, folgende Maßnahmen durchzuführen:
- Feststellen einer Störung der Speisung des Gleichspannungs-Zwischenkreises des ersten Fahrzeugs;
- Aktivieren eines elektrischen Generatorbetriebs der zumindest einen Traktionsmaschine oder wenigstens einer der Traktionsmaschinen (zum Beispiel wenn eine Mehrzahl von Traktionsmaschinen vorhanden und/oder mit dem Motorstromrichter verbunden ist).

Insbesondere kann die Steuereinrichtung, eine andere als die die Störung feststellende Steuereinrichtung des Verbundes oder eine Traktions-Steuereinrichtung dazu ausgebildet sein, eine Fortbewegung des Verbundes durch eine anderes als das gestörte Fahrzeug zu steuern. Bei allen Ausgestaltungen der Steuereinrichtung kann das gestörte Fahrzeug alternativ durch ein Fahrzeug fortbewegt werden, das erst nach dem Auftreten der Störung mit dem gestörten Fahrzeug gekoppelt wird/wurde. Die Steuereinrichtung kann daher insbesondere mit demjenigen Fahrzeug signaltechnisch (z.B. über zumindest eine Steuersignalleitung) verbunden werden oder sein, das nach dem Auftreten der Störung das gestörte Fahrzeug fortbewegt. Es ist aber alternativ oder zusätzlich möglich, dass das fortbewegende Fahrzeug eine eigene Steuereinrichtung zur Steuerung der Fortbewegung aufweist. Ferner kann das gestörte Fahrzeug allgemein in einen Steuerwagenbetrieb geschaltet werden, was auch manuell durch einen Fahrzeugführer erfolgen kann.

Ein Vorteil der Erfindung ist, dass das gestörte Fahrzeug von dem zur Fortbewegung fähigen Fahrzeug gezogen oder geschoben werden kann, wobei in dem gestörten Fahrzeug ein Generatorbetrieb aktiviert wird und insbesondere auch ausgeführt wird. Die beim Generatorbetrieb erzeugte elektrische Energie kann in den zumindest einen Gleichspannungs-Zwischenkreis des gestörten Fahrzeugs eingespeist werden. Daher kann der wenigstens eine Verbraucher des Bordnetzwerks nach wie vor oder nach Unterbrechung der Energieversorgung wieder mit elektrischer Energie versorgt werden. Somit kann die Zuverlässigkeit der Versorgung des wenigstens einen Verbrauchers in dem gestörten Fahrzeug erhöht werden.

Der Verbund kann durch ein mechanisches Koppeln der Fahrzeuge und insbesondere der Schienenfahrzeug-Zugteile gebildet werden. Insbesondere kann ein Koppeln der Fahrzeuge für eine gemeinsame Fortbewegung erfolgen. Ferner kann ein elektrisches und/oder signalübertragendes Koppeln vorgesehen sein.

Bei der Energiequelle kann es sich z. B. um eine Oberleitung, eine Stromschiene oder einen von einem Verbrennungsmotor oder auf andere Weise antreibbaren Generator handeln. Zum Verbinden mit der Energiequelle kann zumindest das erste Fahrzeug einen Stromabnehmer umfassen, der beispielsweise als Pantograph ausgeführt sein/werden kann (insbesondere im Fall einer Energieversorgung durch eine Oberleitung). Zusätzlich oder alternativ kann ein Hauptschalter in dem Fahrzeug vorgesehen sein, um eine Versorgung durch die Energiequelle zu aktivieren oder zu deaktivieren. Der Hauptschalter kann im Traktionsnetzwerk zwischen der Energiequelle und dem Gleichspannungs-Zwischenkreis angeordnet sein. Z. B. eine Fehlfunktion des Hauptschalters kann Ursache der Störung sein. Eine andere Ursache der Störung kann ein defekter Stromabnehmer oder ein defekter Verbrennungsmotor sein.

Der Gleichspannungs-Zwischenkreis, der Motorstromrichter und/oder die Traktionsmaschine können Bestandteile eines Antriebsnetzwerkes des ersten Fahrzeugs sein, das auch als Traktionsnetzwerk bezeichnet werden kann. Im Rahmen der vorliegenden Offenbarung versteht es sich ferner, dass das andere, zweite (oder auch jeglicher weiterer) Fahrzeug des Verbundes analog zu dem ersten Fahrzeug ausgebildet sein kann und sämtliche von dessen hierin erläuterten Komponenten umfassen kann.

Der Gleichspannungs-Zwischenkreis kann eine Speichereinrichtung für elektrische Energie umfassen und/oder daran angeschlossen sein, zum Beispiel mindestens einen Kondensator, Superkondensator und/oder eine Speicherbatterie (z. B. eine elektrochemische). Eine Gleichspannungs-Zwischenkreisspannung kann eingangsseitig an dem Motorstromrichter anliegen. Der Motorstromrichter kann wiederum der Traktionsmaschine vorgeschaltet sein. Der Motorstromrichterist typischerweise ein Wechselrichter. Z. B. ist die Traktionsmaschine über eine vorzugsweise dreiphasige elektrische Verbindung mit dem Motorstromrichter verbunden. Insbesondere kann der Motorstromrichter eine Gleichspannung, die Zwischenkreisspannung, in eine gewünschte Wechselspannung zum Versorgen des Antriebsmotors umwandeln.

Der Motorstromrichter kann je nach Betriebsart der Traktionsmaschine (Motorbetrieb oder Generatorbetrieb) verschiedenartig betreibbar sein.

Gemäß einer Variante kann der Motorstromrichter die geschilderte elektrische Versorgung der Traktionsmaschine und insbesondere eine Umwandlung von Gleichspannung in Wechselspannung während eines Motorbetriebs der Traktionsmaschine vornehmen. Während eines Generatorbetriebs der Traktionsmaschine, der zum Beispiel im Rahmen eines elektrischen Bremsbetriebs erfolgen kann, kann der Motorstromrichter hingegen die von der Traktionsmaschine erzeugte Wechselspannung in eine Gleichspannung umwandeln und vorzugsweise den Gleichspannungs-Zwischenkreis mit der gewonnenen elektrischen Energie versorgen.

Zumindest das erste Fahrzeug kann auch einen Transformator zum Umwandeln der über die Energiequelle verfügbaren Spannung umfassen. Der Transformator kann dem Gleichspannungs-Zwischenkreis, dem Motorstromrichter und/oder der Traktionsmaschine vorgeschaltet sein. Insbesondere kann die Transformatorausgangsspannung eingangsseitig an einem Gleichrichter (im folgenden auch Netzstromrichter) anliegen, der den Gleichspannungs-Zwischenkreis versorgt.

Die Traktionsmaschine kann als Asynchron- oder Synchronmaschine ausgebildet sein. Bevorzugt wird jedoch, dass die nach der Erkennung des Störfalls aktivierte Traktionsmaschine als eine permanentmagneterregte Traktionsmaschine ausgebildet ist, die auch als Permanentmagnetmaschine (PMM) oder Permanentmagnet-Motor bezeichnet werden kann. Bei einer Ausgestaltung des Verfahrens kann daher bei oder nach dem Feststellen der Störung der elektrische Generatorbetrieb als Generatorbetrieb der Traktionsmaschine aktiviert werden, die als permanentmagneterregte Traktionsmaschine ausgebildet ist.

Die Traktionsmaschine kann als Antriebsmaschine oder Traktionsmotor bezeichnet werden. Wie vorstehend erwähnt, kann die Traktionsmaschine in einem Generatorbetrieb betrieben werden, in dem sie elektrische Energie erzeugt, die über den Motorstromrichter in den Zwischenkreis einspeisbar ist.

Bezüglich des Generatorbetriebs kann allgemein vorgesehen sein, dass die Traktionsmaschine des gestörten Fahrzeugs in herkömmlicher Weise mit zumindest einem Rad dieses Fahrzeugs mechanisch über einen Antriebsstrang gekoppelt bleibt oder wird, sodass eine Drehbewegung des Rotors (bzw. Läufers) der Traktionsmaschine im Störfall bei einer Drehbewegung des zumindest einen gekoppelten Rades (d.h. beim Fahren des Fahrzeugs) bewirkt wird. Anders ausgedrückt dreht sich der Rotor ähnlich wie bei einem dynamischen Bremsen des Fahrzeugs, wenn das gestörte Fahrzeug von einem anderen Fahrzeug im Verbund oder einem anderen mit dem gestörten Fahrzeug gekoppelten Fahrzeug gezogen oder geschoben wird. Der sich drehende Rotor kann ein sich änderndes Magnetfeld erzeugen, das eine elektrische Spannung in zumindest einer Wicklung des Stators induziert. Im Fall einer permanentmagneterregten Traktionsmaschine, d.h. wenn der Rotor mindestens einen Permanentmagneten aufweist, wird auch ohne eine elektrische Erregerspannung zum Erzeugen eines Magnetfeldes des Rotors das sich ändernde Magnetfeld erzeugt.

Bei dem Bordnetzwerk (bzw. dem Hilfsbetriebenetzwerk) kann es sich um ein Netzwerk handeln, das dem Gleichspannungs-Zwischenkreis elektrische Energie zur Versorgung des Verbrauchers entnimmt. Der wenigstens eine Verbraucher kann separat von dem Antriebsnetzwerk bereitgestellt sein und insbesondere separat von der Traktionsmaschine. Beispiele elektrischer Verbraucher sind die Beleuchtung (insbesondere Innenbeleuchtung) des Fahrzeugs, ein Belüftungs- und/oder Klimatisierungssystem, ein Kommunikationssystem oder dergleichen. Ferner können die Verbraucher als Kühlungen der Traktionsmaschinen oder eines Antriebsnetzwerks realisiert sein. Die Verbraucher können auch als Hilfsbetriebe des Fahrzeugs bezeichnet werden und/oder sogenannte Hilfsbetriebsfunktionen bereitstellen. Die Verbraucher können Bestandteil des Bordnetzwerkes sein oder separat hiervon ausgebildet und lediglich elektrisch damit verbunden oder verbindbar sein.

Allgemein können die Verbraucher unmittelbar zu Beginn des Generatorbetriebs betrieben oder aktiviert werden oder zumindest zeitnah hierzu. Ebenso können die Verbraucher Funktionen oder, anders ausgedrückt, Hilfsbetriebe bereitstellen, die zwar nicht zwingend sofort beim Beginn aber zumindest im Laufe des Generatorbetriebs aktiviert oder benötigt werden. Dies kann z. B. einen Antriebsmotor-Lüfter oder eine Steuerung des Traktionsstromrichters betreffen. Der Energiebedarf eines oder sämtlicher Verbraucher kann auch (vollständig oder teilweise) zumindest vorübergehend aus einem Energiespeicher gedeckt werden. Der Energiespeicher kann z.B. als Fahrzeug-Batterie realisiert sein. Die Versorgung aus einem solchen Energiespeicher kann insbesondere zu Beginn des Generatorbetriebs erfolgen, beispielsweise bis eine vorbestimmte Mindestspannung des Gleichspannungs-Zwischenkreises erreicht ist. Anschließend kann von der Versorgung durch den Energiespeicher zu einer Versorgung durch den Gleichspannungs-Zwischenkreises gewechselt werden

Die zumindest eine Steuereinrichtung kann in einem oder jedem der Fahrzeuge angeordnet sein/werden. Der Verbund kann also auch über eine Steuereinrichtung verfügen, die mehrere über die einzelnen Fahrzeuge verteilte (Einzel-) Steuereinrichtungen oder Steuereinrichtungskomponenten aufweist, welche vorzugsweise miteinander kommunizieren können.

Die Steuereinrichtung kann elektronisch und/oder digital ausgebildet bzw. betreibbar sein. Sie kann als eine bautechnische Einheit oder als Anordnung von Einheiten ausgestaltet sein. Insbesondere kann die Steuereinrichtung über geeignete Signalpfade (zum Beispiel per Kabel oder Funk) auf die anzusteuernden Fahrzeugeinheiten zugreifen und/oder von diesen Signale empfangen. Das Durchführen der Maßnahmen durch die Steuereinrichtung kann umfassen, dass diese die relevanten Schritte lediglich veranlasst (d. h. mittelbar initiiert und/oder mittelbar ausführt). Beispielsweise kann die Steuereinrichtung Signale ausgeben, um das Ausführen der entsprechenden Schritte durch anderweitige Einheiten mittelbar zu initiieren. Insbesondere das Feststellen der Störung und/oder das Aktivieren des Generatorbetriebs können aber auch von der Steuereinrichtung selbst ausgeführt werden. Dies kann wiederum durch Analysieren und/oder Ausgeben entsprechender Signale erfolgen.

Prinzipiell kann auch vorgesehen sein, beim Feststellen einer Störung einen Steuerwagenbetrieb durch die Steuereinrichtung zu aktivieren. Vorzugsweise erfolgt dies jedoch manuell durch den Fahrer. Der Steuerwagenbetrieb kann umfassen, dass das gestörte und somit teilweise oder vollständig antriebslose Fahrzeug ein nicht gestörtes Fahrzeug steuern kann (zum Beispiel einen Triebwagen, der Bestandteil eines anderen Fahrzeugs des Verbundes ist oder das entsprechende andere Fahrzeug bildet). Um Signale zum Feststellen einer Störung zu empfangen und/oder auszuwerten, kann die Steuereinrichtung eine Feststelleinrichtung umfassen. Diese kann separat von einer Aktivierungseinrichtung der Steuereinrichtung zum Aktivieren des Generatorbetriebs bereitgestellt oder angeordnet, aber hiermit z. B. signalübertragend verbunden sein. Die Feststelleinrichtung und Steuereinrichtung können auch in einer oder als eine gemeinsame Einrichtung realisiert sein. Sofern nicht anders angegeben oder ersichtlich, stellt die Steuereinrichtung im Rahmen der vorliegenden Offenbarung folglich sowohl eine Feststellfunktion als auch eine Aktivierungsfunktion bereit.

Während die bisher genannte Steuereinrichtung in dem gestörten Fahrzeug dafür sorgt, dass der Notbetrieb stattfindet, kann eine Traktions-Steuereinrichtung, die auch als Fortbewegungs-Steuereinrichtung bezeichnet werden kann, nur teilweise oder auch gar nicht in dem gestörten Fahrzeug angeordnet und/oder als eine Komponente dieses gestörten Fahrzeugs realisiert sein. Vorzugsweise ist die Traktions-Steuereinrichtung aber zumindest teilweise oder auch ausschließlich in dem anderen Fahrzeug bereitgestellt, das nicht gestört wird, um dort das Erzeugen der Traktion des gesamten Verbundes zu steuern.

Der Hauptfall kann es daher sein, dass die zuvor genannte Steuereinrichtung ein Teil der Traktions-Steuereinrichtung eines Fahrzeugs ist. Zwingend ist das aber nicht, vor allem wenn der Teil der Traktions-Steuereinrichtung in dem gestörten Zugteil aufgrund der Störung nicht mehr zum Traktionsbetrieb beiträgt.
Die Störung kann ein Unterbrechen der Speisung des Gleichspannung-Zwischenkreises aus der Energiequelle betreffen. Dies kann beispielsweise auf einen Ausfall des Pantografen, eine Störung des Stromabnehmers und/oder einen Defekt des Hauptschalters zurückzuführen sein. Die Steuerung kann dazu ausgebildet sein, die Störung durch eine Änderung der elektrischen Energieversorgung festzustellen (zum Beispiel in Form eines Spannungsabfalls im Gleichspannungs-Zwischenkreis). Alternativ oder zusätzlich kann die Steuerung dazu ausgebildet sein, Störungen des Pantographen, des Stromabnehmers und/oder des Hauptschalters zu detektieren. Ebenso kann eine unerwartet abnehmende Drehzahl der Traktionsmaschine erfasst werden. Hieraus kann zum Beispiel mittelbar auf eine entsprechende Versorgungstörung geschlossen werden.

Der Generatorbetrieb der Traktionsmaschine kann im Rahmen eines elektrischen Bremsbetriebs aktiviert werden, der auch als regenerativer Bremsbetrieb oder Stützbremsbetrieb bezeichnet werden kann. Der elektrische Bremsbetrieb kann im störungsfreien Betrieb eines Fahrzeugs dazu vorgesehen sein, das Fahrzeug alternativ oder zusätzlich zu einer mechanischen Bremse abzubremsen. Insbesondere kann der elektrische Bremsbetrieb eine Rekuperation umfassen. Letzteres kann das Umwandeln von kinetischer Energie in elektrische Energie umfassen. Die elektrische Energie kann über den Motorstromrichter, der in dieser Betriebsphase als ein Gleichrichter betrieben wird, in den Gleichspannungs-Zwischenkreis eingespeist werden. Das Erzeugen der Fortbewegung findet vorzugsweise zeitgleich oder zumindest zeitlich überlappend mit dem Aktivieren des Generatorbetriebs zum Beispiel im Rahmen eines Stützbremsbetriebs statt.

Das Aktivieren des Generatorbetriebs kann durch das Schließen einer gegebenenfalls geöffneten Schaltereinrichtung erfolgen oder eine solche Maßnahme umfassen. Ebenso kann das Aktivieren durch ein Betreiben des Motorstromrichters als ein Gleichrichter erfolgen (oder eine solche Maßnahme umfassen). Hierdurch kann die erzeugte elektrische Energie in den Gleichspannungs-Zwischenkreis gespeist werden.

Vorzugsweise sieht die Erfindung vor, dass sich die Fahrzeuge des Verbundes bei einer Störung wechselseitig unterstützen können. Genauer gesagt kann bei einer Störung in dem ersten Fahrzeug das zweite Fahrzeug das Erzeugen der Fortbewegung übernehmen, während das gestörte Fahrzeug in den Generatorbetrieb wechselt. In umgekehrter Weise kann das erste Fahrzeug bei einer Störung des zweiten Fahrzeugs das Erzeugen der Fortbewegung übernehmen, während das zweite Fahrzeug in den Generatorbetrieb wechselt. Im Rahmen der Erfindung kann aber ebenso vorgesehen sein, dass eines der Fahrzeuge nicht dazu ausgelegt ist, das andere Fahrzeug bei einer entsprechenden Störung anzutreiben. Anders ausgedrückt kann eines der Fahrzeuge rein dazu ausgelegt sein, bei einer Störung seiner Energieversorgung in den Generatorbetrieb zu wechseln und von dem anderen bewegt zu werden, nicht aber das anderen Fahrzeug anzutreiben, wenn Letzteres selbst eine Störung erfährt.

In einer Weiterbildung des Verbundes und des Verfahrens ist die für den Generatorbetrieb aktivierte (oder wenigstens eine der für den Generatorbetrieb aktivierten) Traktionsmaschine(n) als eine permanenterregte oder, mit anderen Worten, Permanentmagnetmaschine ausgebildet. Dies gewährleistet, dass bei dem elektrischen Bremsbetrieb trotz Ausfall der Spannungsversorgung über die Netzspannungsquelle nach wie vor ein Generatorbetrieb der Traktionsmaschine möglich ist. Die elektrische Energie wird dann zum Beispiel über eine Induktion in den Wicklungen des Stators bereitgestellt, die durch Rotieren eines permanenterregten Rotors erzeugt wird.

Ist die Traktionsmaschine nicht permanenterregt, was erfindungsgemäß ebenso vorgesehen sein kann, kann der Generatorbetrieb trotz Ausfall der Spannungsversorgung dadurch gewährleistet werden, dass die Traktionsmaschine mit einem elektrischen Energiespeicher verbunden ist. Über diesen Energiespeicher kann auch im Störfall eine Erregung von Stator und/oder Rotor bereitgestellt werden, um den Generatorbetrieb zu ermöglichen. Ein entsprechendes Aktivieren und/oder Zuschalten des Energiespeichers kann wiederum mittels der Steuereinrichtung erfolgen.

In einer Weiterbildung des Verbundes und des Verfahrens ist der Motorstromrichter im Generatorbetrieb der für den Generatorbetrieb aktivierten (oder von wenigstens einer der für den Generatorbetrieb aktivierten) Traktionsmaschine(n) dazu eingerichtet, den Gleichspannungs-Zwischenkreis auf eine vorgegebene und vorzugsweise auf eine im Wesentlichen konstante Spannung zu regeln. Hierfür kann zumindest das erste Fahrzeug eine Detektionseinrichtung umfassen, mit der sich die Spannung in dem Gleichspannungs-Zwischenkreis bestimmen lässt. Der Motorstromrichter kann auf Basis von Messsignalen der Detektionseinrichtung die Spannung des Gleichspannungs-Zwischenkreises in der geschilderten Weise regeln. Der Motorstromrichter kann in diesem Zusammenhang als Gleichrichter betrieben werden, um eine vorbestimmte Gleichspannung in dem Gleichspannungs-Zwischenkreis zu erzeugen.

Gemäß einer weiteren Variante von Verbund und Verfahren umfasst wenigstens das erste Fahrzeug eine Schaltereinrichtung, der ein elektrisches Trennen oder Verbinden der Traktionsmaschine ermöglicht (insbesondere ein elektrisches Trennen oder Verbinden mit weiteren Komponenten des Antriebsnetzwerkes, zum Beispiel dem Traktion-Stromrichters). Die Schaltereinrichtung kann einen Motorschutzschalter (vorzugsweise mehrphasig) oder, anders ausgedrückt, einen Motorschütz umfassen oder als eine solche Variante ausgebildet sein. Allgemein kann die Schaltereinrichtung dazu ausgebildet sein, die Traktionsmaschine (insbesondere wenn diese in einem Motorbetrieb betrieben wird) selektiv von verbleibenden Komponenten eines Antriebsnetzwerkes des Fahrzeugs elektrisch zu trennen. Dies kann insbesondere ein selektives Trennen von dem Motorstromrichter umfassen. Die Traktionsmaschine kann hierdurch elektrisch abgeschaltet bzw. elektrisch abgetrennt werden. Das Trennen kann durch ein Öffnen der Schaltereinrichtung erzielt werden, woraufhin sich diese nicht mehr in einem stromleitenden Zustand befindet.

Die Schaltereinrichtung kann in dem gestörten Fahrzeug in einen stromleitenden Zustand versetzbar oder betreibbar sein, beispielsweise durch ein Schließen hiervon. Dies kann zum Beispiel dann relevant sein, wenn die Traktionsmaschine aufgrund der detektierten Störung aus Sicherheitsgründen zunächst durch ein Öffnen der Schaltereinrichtung elektrisch von weiteren Komponenten des Antriebsnetzwerkes entkoppelt wurde. Wird anschließend ein elektrischer Bremsbetrieb in dem entsprechenden Fahrzeug aktiviert (und/oder der Generatorbetrieb der Traktionsmaschine), durch den elektrische Energie wieder in den Gleichspannungs-Zwischenkreis gespeist werden soll, kann durch das Schließen der Schaltereinrichtung erreicht werden, dass die elektrische Verbindung der Traktionsmaschine zu dem Gleichspannungs-Zwischenkreis wiederhergestellt wird. Das Schließen der Schaltereinrichtung kann, wie vorstehend erläutert, auch in einem Aktivieren des Generatorbetriebs resultieren oder von einem solchen Aktivieren umfasst sein.

In einer Weiterbildung des Verbundes und des Verfahrens umfasst das Bordnetzwerk einen Stromrichter, der vorzugsweise zwischen den Gleichspannungs-Zwischenkreis und den elektrischen Verbraucher geschaltet ist. Der Stromrichter kann als Wechselrichter betreibbar sein und z. B. als Hilfsbetriebeumrichter bezeichnet werden. Insbesondere kann der Stromrichter (z. B. Hilfsbetriebeumrichter) dazu ausgebildet sein, eine Gleichspannung des Gleichspannungs-Zwischenkreises in eine einphasige oder mehrphasige Wechselspannung umzuwandeln (Umrichterbetrieb). Die Spannung kann eingangsseitig an den Verbrauchern anliegen.

In diesem Zusammenhang kann ferner vorgesehen sein, dass der Stromrichter des Bordnetzwerks erst dann aktiviert wird, wenn ein vorbestimmtes Kriterium bezüglich des Zustands des Gleichspannungs-Zwischenkreises erfüllt ist, insbesondere das Erreichen einer vorbestimmten Gleichspannungs-Zwischenkreisspannung. Unter einem Aktivieren des Stromrichters kann allgemein verstanden werden, dass dieser das Bordnetzwerk daraufhin mit einer gewünschten Spannung versorgt. Ist der Stromrichter hingegen deaktiviert, kann das Bordnetzwerk spannungsfrei bleiben und die Verbraucher können nicht betriebsfähig sein. Das Aktivieren und Deaktivieren des Stromrichters kann über ein Entsperren und Sperren von optionalen Halbleiterschaltelementen des Stromrichters erfolgen.

Das vorbestimmte Kriterium kann derart gewählt sein, dass eine ausreichende Betriebssicherheit des Gleichspannungs-Zwischenkreises und insbesondere eine ausreichende Menge an darin gespeicherter elektrischer Energie gewährleistet ist. Anders ausgedrückt kann durch das vorbestimmte Kriterium sichergestellt werden, dass der Verbraucher möglichst lang und gegebenenfalls sogar dauerhaft mit elektrischer Energie versorgt werden kann, ohne dass der Gleichspannungs-Zwischenkreis zu schnell an elektrischer Energie und/oder Spannung verliert.

Sowohl der Motorstromrichter des Antriebsnetzwerkes als auch der zuvor genannte Stromrichter des Bordnetzwerkes können als Frequenzumrichter betreibbar oder als solche ausgebildet sein. Insbesondere können diese Stromrichter jeweils elektrische Schaltelemente wie zum Beispiel MOSFET oder IGBT umfassen.

Eine Weiterbildung des Verbundes und des Verfahrens sieht vor, dass der Generatorbetrieb erst dann aktiviert wird, wenn ein vorbestimmtes Kriterium bezüglich der Geschwindigkeit erfüllt ist, insbesondere das Erreichen einer vorbestimmten Mindestgeschwindigkeit. Hierdurch kann sichergestellt werden, dass der Verbund nicht zu stark elektrisch abgebremst wird bzw. erst dann abgebremst wird, wenn seine Geschwindigkeit ausreicht, um einen durch den Generatorbetrieb erzeugten Bewegungswiderstand zu überwinden. Die Mindestgeschwindigkeit kann deshalb allgemein derart gewählt sein, dass sie über einer Geschwindigkeit liegt, die rein über den Generatorbetrieb und/oder einem damit einhergehenden elektrischen Bremsbetrieb abgebremst werden könnte (d. h. eine Geschwindigkeit, die ohne Zuschalten einer mechanischen Bremse rein elektrisch abbremsbar ist). Anders ausgedrückt kann die Mindestgeschwindigkeit derart gewählt sein, dass der durch den Generatorbetrieb erzeugte Bewegungswiderstand in jedem Fall überwindbar ist. Als Beispiele seien eine Mindestgeschwindigkeit von wenigstens 10 km/h, wenigstens 20 km/h, wenigstens 30 km/h, wenigstens 40 km/h oder wenigstens 50 km/h genannt.

Insbesondere kann hierdurch aber sichergestellt werden, dass der Energiebedarf der Verbraucher mit einer ausreichenden Zuverlässigkeit gedeckt werden kann. Anders ausgedrückt kann vor dem Erreichen der Mindestgeschwindigkeit die Generatorleistung nicht ausreichend sein, um das Bordnetzwerk und insbesondere einen dort vorhandenen Stromrichter (z. B. Hilfsbetriebeumrichter) zu speisen. Deshalb kann zunächst abgewartet werden, bis die Mindestgeschwindigkeit erreicht ist, bei der eine entsprechende Energieversorgung möglich ist.

Im Rahmen der vorliegenden Offenbarung kann sich die Geschwindigkeit allgemein auf eine Fahrgeschwindigkeit des Fahrzeugs bzw. des Verbundes beziehen und insbesondere auf eine Rotationsgeschwindigkeit eines Rades des Fahrzeugs, das während der Fahrt des Fahrzeugs auf dem Untergrund (zum Beispiel auf der Fahrschiene) abrollt. Die Rotationsgeschwindigkeit des Rades ist proportional zur Fahrgeschwindigkeit des Fahrzeugs, wenn kein erheblicher Schlupf zwischen Rad und Untergrund auftritt. Alternativ kann sich bei der Geschwindigkeit um eine Rotationsgeschwindigkeit eines Läufers einer Traktionsmaschine des Verbundes handeln, die sich nicht im Generatorbetrieb befindet, sondern zum Erzeugen der Fortbewegung verwendet wird. Die Geschwindigkeit kann auch aus einer solchen Rotationsgeschwindigkeit berechnet werden (zum Beispiel in eine Fahr-Geschwindigkeit umgerechnet werden). Wenn zwischen der Traktionsmaschine und dem angetriebenen Rad oder den angetriebenen Rädern des Verbundes keine Veränderung der Übersetzung der Drehzahlen stattfindet, ist die Rotationsgeschwindigkeit des Läufers proportional zur Rotationsgeschwindigkeit des oder der Räder.

In einer Weiterbildung des Verbundes und des Verfahrens ist vorgesehen, dass nach einem Aktivieren des Generatorbetriebs und bei Erfüllen eines vorbestimmten Kriteriums der Generatorbetrieb zumindest temporär wieder deaktiviert wird, insbesondere wobei das Kriterium das Unterschreiten einer vorbestimmten Mindestgeschwindigkeit betrifft. Dies kann zum Beispiel dann relevant sein, wenn der Fahrzeugverbund während der Fahrt ungeplante oder geplante Stopps einlegt, beispielsweise das Anhalten an Haltestellen. Um durch den Generatorbetrieb nicht ein erneutes Anfahren zu verhindern, kann dieser zumindest temporär beendet werden, wenn die entsprechende Mindestgeschwindigkeit unterschritten wird. Insbesondere kann das Deaktivieren aber deshalb erfolgen, wenn, wie vorstehend erläutert, unterhalb einer entspreche Mindestgeschwindigkeit keine ausreichende Energieversorgung der elektrischen Verbraucher bzw. des Bordnetzwerks möglich ist.

Die Mindestgeschwindigkeit für das Deaktivieren des Generatorbetriebs kann gleich, geringer oder größer als die Mindestgeschwindigkeit für das Aktivieren des Generatorbetriebs sein. In einer Variante beträgt die Mindestgeschwindigkeit für das Deaktivieren im Wesentlichen 0 km/h oder aber nicht mehr als 10 km/h, nicht mehr als 20 km/h, nicht mehr als 30 km/h, nicht mehr als 40 km/h oder nicht mehr als 50 km/h.

Eine Weiterbildung von Verfahren und Anordnung sieht vor, dass die Steuereinrichtung, eine Traktions-Steuereinrichtung oder eine andere Steuereinrichtung des Verbundes, als diejenige, die die Störung feststellt, dazu eingerichtet ist, wenigstens eine Betriebsgröße von Fahrgeschwindigkeit, Antriebsleistung, Zugkraft und Traktionskraft des anderen (nicht-gestörten) Fahrzeugs in Reaktion auf das Feststellen der Störung anzupassen und insbesondere zu erhöhen. Hierdurch kann zum Beispiel des Traktionskraftbeitrags des gestörten Fahrzeugs zumindest teilweise kompensiert werden.

Die Erfindung betrifft ferner ein Verfahren zum Speisen eines elektrischen Bordnetzwerks in einem Verbund aus wenigstens zwei Fahrzeugen, die insbesondere jeweils wenigstens einen Schienenfahrzeug-Zugteil umfassen, wobei zumindest ein erstes Fahrzeug Folgendes umfasst:
- einen aus einer Energiequelle mit elektrischer Energie speisbaren Gleichspannungs-Zwischenkreis, an den zumindest ein Motorstromrichter angeschlossen ist, der wiederum mit zumindest einer Traktionsmaschine verbunden ist; und
- ein mit dem Gleichspannungs-Zwischenkreis elektrisch verbundenes oder verbindbares Bordnetzwerk zur Versorgung wenigstens eines elektrischen Verbrauchers des ersten Fahrzeugs;
wobei das Verfahren Folgendes umfasst:
- Feststellen einer Störung der Speisung des Gleichspannungs-Zwischenkreises des ersten Fahrzeugs;
- Erzeugen einer Fortbewegung durch ein Fahrzeug, das nicht das erste Fahrzeug ist;
- Aktivieren eines elektrischen Generatorbetriebs der Traktionsmaschine.

Im Rahmen der vorliegenden Offenbarung kann das erste Fahrzeug allgemein an einer beliebigen Position innerhalb des Verbundes positioniert sein. Es kann (muss sich aber nicht) um ein Fahrzeug an der Spitze oder am Ende des Verbundes handeln oder aber um ein Fahrzeug an einer beliebigen Stelle innerhalb des Verbundes.

Das Verfahren kann jeglichen weiteren Schritt, jegliche Weiterbildung und jegliches weitere Merkmal umfassen, um sämtliche der vorstehenden oder nachstehenden Wechselwirkungen, Betriebszustände und Funktionen bereitzustellen. Insbesondere können jegliche vorstehenden oder nachstehenden Erläuterungen und Weiterbildungen der Anordnungsmerkmale auch auf die gleichlautenden Verfahrensmerkmale zutreffen bzw. bei diesen ebenfalls vorgesehen sein. Insbesondere kann das Verfahren mit einem Verbund gemäß jeglichen der vorstehenden oder nachstehenden Aspekte ausführbar sein oder ausgeführt werden.

Das Verfahren kann optional wenigstens einen der folgenden weiteren Schritte umfassen:
- Betreiben der Traktionsmaschine im Generatormodus durch Aktivieren eines elektrischen Bremsbetriebs.
- Regeln des Gleichspannungs-Zwischenkreises auf eine vorgegebene und vorzugsweise auf einer ihm Wesentlichen konstante Spannung, insbesondere mittels des Motorstromrichters.
- Versetzen oder Betreiben einer Schaltereinrichtung in dem ersten Fahrzeug in einen stromleitenden Zustand, insbesondere bei einem, vor einem oder zwecks eines Aktivieren(s) des Generatorbetriebs.
- Aktivieren eines Stromrichters (z. B. Hilfsbetriebeumrichters) in dem Bordnetzwerk des gestörten Fahrzeugs, wenn ein vorbestimmtes Kriterium bezüglich des Zustandes der Gleichspannungs-Zwischenkreises erfüllt ist, insbesondere das Erreichen einer vorbestimmten Gleichspannungs-Zwischenkreisspannung.
- Zumindest temporäres Deaktivieren des Generatorbetriebs bei Erfüllen eines vorbestimmten Kriteriums, insbesondere wobei das Kriterium das Unterschreiten einer vorbestimmten Mindestgeschwindigkeit betrifft.
- Aktivieren eines Steuerwagenbetriebs in demjenigen Fahrzeug, in dem die Störung festgestellt wurde.
- Abbremsen des Verbundes bis zum Stillstand, nachdem eine Störung festgestellt wurde, und insbesondere bevor der Generatorbetrieb aktiviert wird;
- Schließen einer Schaltereinrichtung in dem Antriebsnetzwerk des gestörten Fahrzeugs, nachdem der Stillstand erreicht wurde.
- Betreiben einer Kühlvorrichtung des Motorstromrichters (zum Beispiel einer Kühlwasserpumpe und/oder eines Lüfters) während des Generatorbetriebs.
- Anpassen wenigstens einer Betriebsgröße von Fahrgeschwindigkeit, Antriebsleistung, Zugkraft und Traktionskraft des die Fortbewegung erzeugenden Fahrzeugs in Reaktion auf das Feststellen der Störung.

Zu betonen ist, dass ein Abbremsen bis zum Stillstand rein optional ist und keine Voraussetzung für die Ausführung der Erfindung ist.

Sämtliche Verfahrensschritte können dabei von einer Steuereinrichtung der vorstehend diskutierten Art veranlasst oder ausgeführt werden (d. h. auch mit dem vorliegend offenbarten Verbund können jegliche der vorstehend oder nachstehend diskutierten Verfahrensschritte ausgeführt werden). Weiterhin können die vorstehend aufgelisteten Verfahrensschritte in beliebiger Kombination miteinander vorgesehen sein oder auch lediglich einzeln.

Im Folgenden wird eine Ausführungsform der Erfindung anhand der beigefügten schematischen Figuren erläutert. Es stellen dar:
- Fig. 1A: eine Darstellung eines erfindungsgemäßen Verbundes mehrerer Fahrzeuge, die jeweils mehrere Schienenfahrzeug-Zugteile umfassen, wobei der Verbund ein erfindungsgemäßes Verfahren ausführt;
- Fig. 1B: eine schematische Darstellung von elektrischen Netzwerken des Verbundes aus Figur 1A;
- Fig. 1C: eine Prinzipskizze zum Erläutern eines Gleichspannungs-Zwischenkreises in den elektrischen Netzwerken aus Figur 1B; und
- Fig. 2: ein alternatives Beispiel für einen Verbund aus mehreren Teilverbünden.

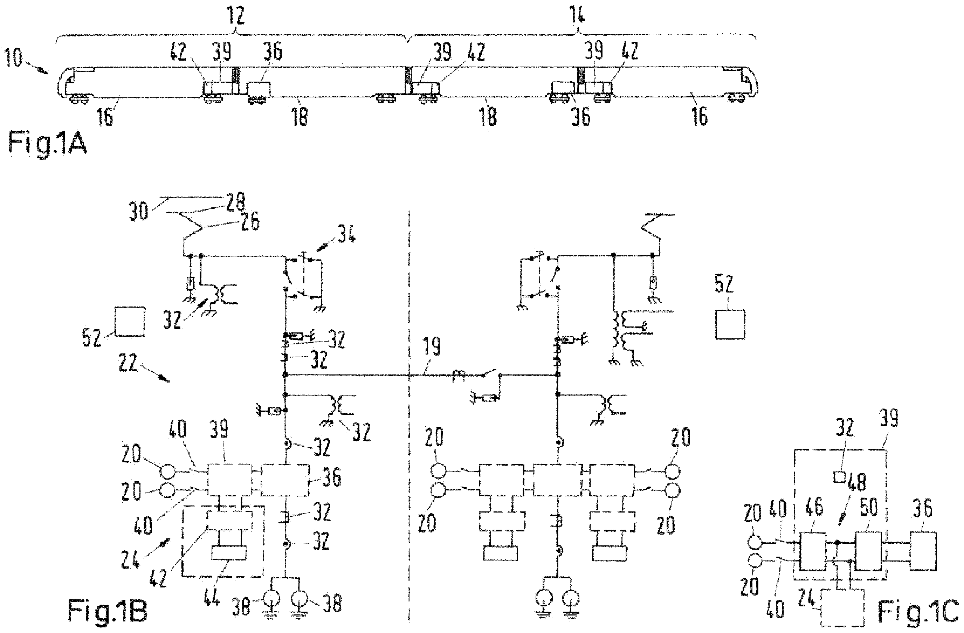

In Figur 1A ist ein Verbund 10 mehrerer Fahrzeuge 12, 14 gemäß einer Ausführungsform der Erfindung gezeigt, wobei der Verbund 10 ein Verfahren gemäß einer erfindungsgemäßen Variante ausführt.

Die Fahrzeuge 12, 14 des Verbundes 10 umfassen jeweils mehrere Schienenfahrzeug-Zugteile 16, 18 und sind für eine gemeinsame Fortbewegung mechanisch miteinander gekoppelt. Die Schienenfahrzeug-Zugteile eines jeden Fahrzeugs 12, 14 sind als ein Steuerwagen 16 sowie ein Mittelwagen 18 realisiert. Die nachfolgend erläuterten Komponenten der elektrischen Netzwerke der Fahrzeuge 12, 14 sind jeweils über den Steuerwagen 16 und den Mittelwagen 18 verteilt, können aber auch lediglich in einem von Steuerwagen 16 und Mittelwagen 18 zusammengefasst sein.

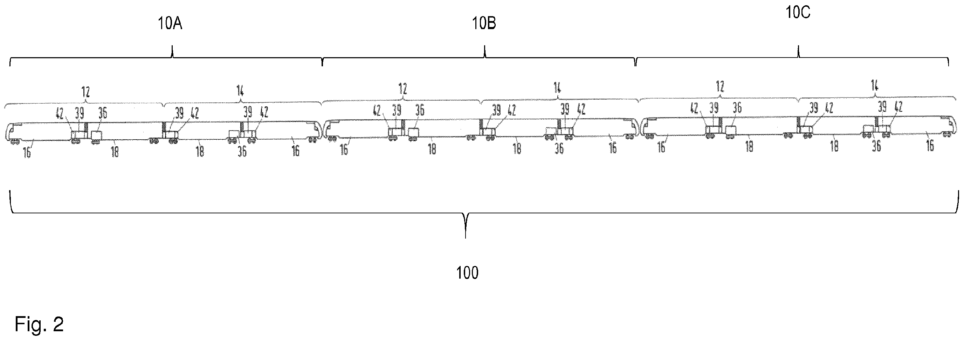

Wie im Folgenden noch genauer anhand von Figur 2 erläutert, kann ein erfindungsgemäßer Verbund auch darin bestehen, dass jeweils mehrere Fahrzeuge (z.B. alle Fahrzeuge des in Fig. 1A dargestellten Verbundes 10) einen Teilverbund bilden, der mit einem identischen Teilverbund aus entsprechenden Fahrzeugen (oder auch einem hiervon abweichenden anderen Teilverbund) gekoppelt ist. Der Verbund kann somit auch als Gesamtverbund bezeichnet werden. Tritt in einem der Teilverbunde eine Störung auf, können dort die geschilderten Maßnahmen getroffen werden und der nicht gestörte Teilverbund kann den gesamten Verbund fortbewegen. Ein entsprechender Teilverbund kann auch für sich genommen als ein einzelnes Fahrzeug betrachtet werden, sodass der geschilderte Verbund aus mehreren Fahrzeugen besteht. Eine Störung in einem der Teilverbunde besteht insbesondere in den Fällen, dass die Speisung sämtlicher Gleichspannungs-Zwischenkreise in dem Teilverbund gestört ist oder dass die Speisung nur eines Teils der Gleichspannungs-Zwischenkreise in dem Teilverbund gestört ist. In all diesen Fällen kann ein anderer Teilverbund den Verbund (Gesamtverbund) fortbewegen und kann ein Generatorbetrieb mindestens einer Traktionsmaschine in dem gestörten Teilverbund aktiviert werden.

In Figur 1B sind die für die Erläuterung der Erfindung relevanten elektrischen Netzwerke der Fahrzeuge 12, 14 schematisch gezeigt. Zu Erläuterungszwecken sind die Netzwerke der einzelnen Fahrzeuge 12, 14 in der Darstellung von Figur 1B durch eine Strichlinie voneinander getrennt. Sie können aber in an sich bekannter Weise über eine Verbindungsleitung 19 selektiv elektrisch miteinander verbunden werden. Ferner ist es für das nachstehend geschilderte Verfahren prinzipiell ausreichend, wenn lediglich die Netzwerke des linken Fahrzeugs 12 in der dargestellten Weise ausgebildet sind. Die Netzwerke des rechten Fahrzeugs 14 könnten auch anders ausgebildet sein.

Im Detail sind in der linken Hälfte von Figur 1B die Netzwerke des ersten Fahrzeugs 12 und in der rechten Hälfte diejenigen des zweiten Fahrzeugs 14 gezeigt. Die dargestellten Netzwerke der einzelnen Fahrzeuge 12, 14 sind in ihrer Funktionsweise prinzipiell identisch. Aus Gründen der Übersichtlichkeit werden daher lediglich die in Figur 1B linken Netzwerke näher erläutert und sind mit einem entsprechenden Bezugszeichen versehen.

Lediglich beispielhaft liegt ein Unterschied zwischen den elektrischen Netzwerken der Fahrzeuge 12, 14 dahingehend vor, als dass das in Figur 1B rechte Fahrzeug 14 über die doppelte Anzahl von Traktionsmaschinen 20 samt dazugehörigen Stromversorgungskomponenten verfügt. Dies wirkt sich jedoch nicht auf die nachfolgend erläuterte prinzipielle Funktionsweise der entsprechenden Netzwerke aus.

In der linken Hälfte von Figur 1B erkennt man zunächst, dass die elektrischen Netzwerke des Fahrzeugs 12 ein Antriebsnetzwerk 22 (oder auch Traktionsnetzwerk) und ein Bordnetzwerk 24 umfassen, das auch als Hilfsbetriebenetzwerk bezeichnet werden kann. Das Bordnetzwerk 24 ist strichliert umrissen dargestellt, wobei außerhalb der Strichlinie liegende Komponenten dem Antriebsnetzwerk 22 zuzuordnen sind.

Das Antriebsnetzwerk 22 umfasst einen Pantografen 26 mit Schleifleisten 28, der mit einer Netzspannungsquelle in Form einer strichförmig dargestellten Oberleitung 30 elektrisch leitend verbunden werden kann. Die Netzspannungsquelle dient als Energiequelle zur Versorgung des Antriebsnetzwerks 22 und dessen Komponenten mit elektrischer Energie. Das Antriebsnetzwerk 22 umfasst eine dem Pantografen 26 nachgeschaltete Detektionseinrichtung 32 in Form eines Spannungsmesstransformators. Mittels dieser Detektionseinrichtung 32 kann bestimmt werden, ob über den Pantografen um 26 (bzw. dessen Schleifleisten 28) elektrische Energie in das Antriebsnetzwerk 22 eingespeist wird, oder ob diesbezüglich eine Störung vorliegt. In der nachstehend geschilderten Weise kann das Detektieren einer solchen Störung dazu verwendet werden, einen elektrischen Generatorbetrieb bzw. Stützbremsbetrieb zu aktivieren. Zusätzlich kann auch ein Steuerwagenbetrieb in dem gestörten Fahrzeug 12, 14 aktiviert werden. Dies erfolgt jedoch bevorzugt manuell durch den Fahrer, beispielsweise wenn dieser einen entsprechenden Warnhinweis bezüglich einer detektierten Störung erhalten hat. Falls die Fahrzeuge 12, 14 (bzw. der Verbund 10) einen einleitend der Figurenbeschreibung erläuterten Teilverbund bilden, kann für diesen Teilverbund in analoger Weise ein Steuerwagenbetrieb aktiviert werden.

Weiterhin erkennt man in Figur 1B einen Hauptschalter 34, der das Einspeisen der über den Stromabnehmer 28 übertragenen und von der Detektionseinrichtung 32 detektierten elektrischen Energie in die nachgeschalteten Komponenten des Antriebsnetzwerks 22 ermöglicht. Alternativ kann der Hauptschalter 34 diese Energieübertragung unterbinden (d. h. geöffnet werden). Ist der Hauptschalter 34 defekt und verbleibt zum Beispiel in einem die Energieübertragung unterbindenden Zustand, liegt eine Störung vor, bei der das Antriebsnetzwerk 22 nicht mehr von der Netzspannungsquelle mit elektrischer Energie versorgt werden kann.

Ob ein derartiger Defekt vorliegt, kann beispielsweise über die dem Hauptschalter 34 nachgelagerten weiteren Detektionseinrichtungen 32 ermittelt werden. Diese können zum Beispiel den Strom messen, der über den Hauptschalter 34 in die nachgeschalteten Bestandteile des Antriebsnetzwerkes 22 fließt (siehe die oberen beiden und als einzelne Spulen dargestellten Strommesseinheiten bzw. Stromesstransformatoren). Zusätzlich oder alternativ kann erneut eine Detektionseinrichtung 32 in Form eines Spannungsmesstransformators vorgesehen sein.

Dem Hauptschalter 34 nachgeschaltet ist ein an sich optionaler Transformator 36, der auch als Traktionstransformator bezeichnet werden kann. Dieser wandelt die an der Oberleitung anliegende und typischerweise vorgegebene bzw. normierte Spannung von zum Beispiel 15 kV in eine gewünschte Spannung um.

Der Transformator 36 ist zum einen mit den Rädern 38 des Schienenfahrzeug-Zugteils 12 elektrisch verbunden, wobei nur ausgewählte Räder 38 in der Darstellung von Figur 1B gezeigt sind. Zum anderen ist der Transformator 36 ausgangsseitig mit einer Funktionseinheit 39 verbunden. Die Funktionseinheit 39 umfasst einen nachfolgend anhand von Figur 1C erläuterten Motorstromrichter bzw. Traktionsstromrichter 46, einen Gleichspannungs-Zwischenkreis 48 und einen Gleichrichter in Form eines Netzstromrichters 50. Man erkennt ferner, dass die Funktionseinheit 39 mit dem Bordnetzwerk 24 verbunden ist. Es wäre prinzipiell auch möglich, die Funktionseinheit 39 als einen Traktions-Stromrichter zu realisieren, der den Motorstromrichter 46, den Gleichspannungs-Zwischenkreis 48 und den Netzstromrichter 50 umfasst.

In Figur 1C ist ein Teilausschnitt des anhand von Figur 1B erläuterten elektrischen Netzwerks des rechten Fahrzeugs 12 aus Figur 1A gezeigt. Die Darstellung dient insbesondere dazu, die Komponenten der Funktionseinheit 39 näher zu erläutern. Man erkennt, dass ein Netzstromrichter 50, der eine Step-up, Step-down oder 4QC-Konfiguration aufweisen kann, mit dem Ausgang des Transformators 36 verbunden ist. Über einen Gleichspannungs-Zwischenkreis 48 ist dieser Netzstromrichter 50 mit einem Motorstromrichter (oder auch Traktions-Stromrichter) 46 verbunden. Der Motorstromrichter 46 ist wahlweise als Umrichter oder als Gleichrichter betreibbar. Ferner ist der Motorstromrichter 46 ausgangsseitig mit einer Mehrzahl von Traktionsmaschinen 20 verbunden. Diese sind in dem gezeigten Ausführungsbeispiel als Permanentmagnetmaschinen ausgebildet, die sowohl in einem Motorbetrieb als auch in einem Generatorbetrieb betreibbar sind.

In an sich bekannter Weise ist der Gleichspannungs-Zwischenkreis 48 zum Speichern elektrischer Energie ausgebildet und kann hierfür auch eine elektrische Speichereinheit wie zum Beispiel einen Kondensator umfassen (nicht dargestellt). Der Gleichspannungs-Zwischenkreis 48 ist ferner mit dem nachfolgend näher erläuterten Bordnetzwerk 24 verbunden und wird in dem gezeigten Beispiel durch den Netzstromrichter 50 gespeist und auch durch die Traktionsmaschinen 20, wenn diese in einem Generatorbetrieb betrieben werden. In letzterem Fall findet die Speisung auch über den Motorstromrichter 46 statt, der dann als Gleichrichter betrieben wird. Der Gleichspannungs-Zwischenkreis 48 verfügt ferner über eine lediglich schematisch angedeutete Detektionseinrichtung 32, mit der die Spannung in dem Gleichspannungs-Zwischenkreis 48 bestimmt werden kann.

Zwischen den Traktionsmaschinen 20 und dem Motorstromrichter 46 ist jeweils eine Schaltereinrichtung 40 geschaltet (oder auch ein Motorschütz), welche die elektrische Verbindung zwischen diesen Komponenten selektiv öffnen und schließen kann. Die Schaltereinrichtung 40 ist an sich optional und kann zum Beispiel dazu verwendet werden, den Motorstromrichter 46 vor einer Klemmenspannung der Traktionsmaschine 20 zu schützen. Wird die Traktionsmaschine 20 im Generatorbetrieb betrieben, kann durch Schließen der Schaltereinrichtung 40 ermöglicht werden, dass die erzeugte elektrische Energie zu dem Bordnetzwerk 24 gelangen kann.

Zurückkommend auf 1B erkennt man, dass das Bordnetzwerk 24 einen an sich optionalen Stromrichter 42 umfasst. Dieser ist in dem gezeigten Beispiel dazu ausgelegt, die Gleichspannung des Gleichspannungs-Zwischenkreises 48 in eine ein- oder mehrphasige Wechselspannung umzuwandeln. Der Stromrichter 42 des Bordnetzwerkes 24 ist ausgangsseitig mit einem lediglich schematisch angedeuteten Verbraucher 44 verbunden. Der Verbraucher 44 kann eine Hilfsbetriebsfunktion des Fahrzeugs 12 bereitstellen, zum Beispiel die Innenbeleuchtung des Fahrzeugs 12 oder eine Klimatisierung hiervon. Es versteht sich, dass auch mehrere Verbraucher 44 vorgesehen sein können.

Schließlich ist eine Steuereinrichtung 52 gezeigt, die über nicht dargestellte Signalpfade mit sämtlichen der geschilderten Komponenten verbunden ist und von diesen Signale empfangen und/oder an diese aussenden kann. Hierbei kann es sich zum Beispiel um von den Detektionseinrichtungen 32 empfangene Signale handeln. Die ausgesendeten Signale können hingegen dazu dienen, die geschilderten Komponenten des Antriebsnetzwerks 22 und auch des Bordnetzwerkes 24 zu aktivieren oder zu deaktivieren oder in die geschilderten Betriebsmodi zu schalten.

Lediglich der Vollständigkeit halber sei erneut auf Figur 1A verwiesen, in der die Verteilung der vorstehend geschilderten Hauptkomponenten des Antriebsnetzwerk 22 in Form des Transformators 36, der Funktionseinheit 39 und des Motorstromrichters 42 des Bordnetzwerks 24 innerhalb der Fahrzeuge 12, 14 gezeigt ist.

Im störungsfreien Betrieb wird über den Stromabnehmer 28 (und den geschlossenen Hauptschalter 34) elektrische Energie aus der Netzspannungsquelle 30 in das Antriebsnetzwerk 22 eingespeist. Der Transformator 36 wandelt die anliegende Spannung in eine gewünschte Spannung um, welche dann von dem Netzstromrichter 50 in eine Gleichspannung umgewandelt wird. Um eine Fortbewegung bereitzustellen, werden (oder sind) die Schaltereinrichtungen 40 geschlossen und der Motorstromrichter 46 wandelt die Spannung des Gleichspannungs-Zwischenkreises 48 in eine für den Motorbetrieb der Traktionsmaschinen 20 geeignete Spannung um. Ebenso erfolgt eine Speisung des Bordnetzwerkes 24 über den Gleichspannungs-Zwischenkreis 48, um die geschilderten Hilfsbetriebefunktionen bereitzustellen.

Kommt es jedoch zu einer Störung der Energieeinspeisung aus der Netzspannungsquelle 30, beispielsweise bei einer Fehlfunktion des Pantografen 26 oder des Hauptschalters 34, kann der Gleichspannungs-Zwischenkreis 48 nicht länger mit elektrischer Energie versorgt werden. Dies bedeutet auch, dass die Traktionsmaschinen 20 nicht länger eine ausreichende Fortbewegung bereitstellen können. Ein solcher Fehlerfall kann auf vielfältige Weise von der Steuereinrichtung 52 festgestellt werden. Als Beispiele seien das Feststellen eines unerwarteten Spannungsabfalls innerhalb des Antriebsnetzwerks 22 genannt (insbesondere in dem Gleichspannungs-Zwischenkreis 48) oder eine ausbleibende Rotation der Traktionsmaschinen 20.

Im Fall des eingangs der Figurenbeschreibung erläuterten alternativen Ausführungsbeispiels, bei dem ein Verbund 10 aus mehreren Teilverbunden gebildet wird, die z.B. jeweils die in Figur 1A gezeigten Fahrzeuge 12, 14 umfassen, kann eine Störung auch in der Weise vorliegen bzw. detektiert werden, dass die Pantografen 26 beider Fahrzeuge 12, 14 eines Teilverbundes oder beide Hauptschalter 34 in den jeweiligen Fahrzeugen 12, 14 nicht korrekt funktionieren oder das zumindest einer der beiden Pantografen 26 und der andere Hauptschalter 34 auf jeder Einspeiseseite nicht korrekt funktioniert.

Die Steuereinrichtung 52 des von der Störung betroffenen Fahrzeugs 12 kann optional das Auftreten der Störung an eine analoge Steuereinrichtung 52 des weiteren Fahrzeugs 14 kommunizieren. Es kann aber auch vorgesehen sein, dass lediglich eine zentrale Steuereinrichtung 52 für beide Fahrzeuge 12, 14 vorgesehen ist. Ebenso kann vorgesehen sein, dass die Steuereinrichtung(en) 52 mehrere Steuerkomponenten umfasst (bzw. umfassen), die zum Beispiel über einzelne Komponenten des Antriebs- und/oder Bordnetzwerks 22, 24 verteilt sind und die vorzugsweise miteinander kommunizieren. Beispiele derartiger Steuerkomponenten sind eine Feststelleinrichtung zum Ermitteln einer Störung oder eine Aktivierungseinrichtung zum Aktivieren des Generatorbetriebs.

Tritt die geschilderte Störung auf, übernimmt das nicht gestörte Fahrzeug 14 das Erzeugen der Fortbewegung und zieht oder schiebt das nicht länger antriebsfähigen Fahrzeug 12 in die gewünschte Richtung. In dem gestörten Fahrzeug 12 aktiviert die Steuereinrichtung 52 daraufhin einen elektrischen Bremsbetrieb. Dies umfasst, dass die Traktionsmaschinen 20 in einem Generatorbetrieb betrieben werden, die Schaltereinrichtungen 40 geschlossen werden oder in einem geschlossenen Zustand verbleiben und der Motorstromrichter 46 als ein Gleichrichter betrieben oder in einen solchen Betriebszustand geschaltet wird. Daraufhin wird das Fahrzeug 12 gegen den Bewegungswiderstand der im Generatorbetrieb betriebenen Traktionsmaschinen 20 bewegt. Die von dem störungsfreien Fahrzeug 14 bereitgestellte Fortbewegung bzw. kinetische Energie wird daraufhin von den im Generatormodus betriebenen Traktionsmaschinen 20 des gestörten Fahrzeugs 12 in an sich bekannter Weise in elektrische Energie umgewandelt.

Insbesondere wird der Rotor der Traktionsmaschinen 20 nach Maßgabe der Fortbewegung mitrotiert, da sie auch bei Auftreten der Störung mechanisch mit dem Antriebsstrang des Fahrzeugs 12 und insbesondere den Rädern 38 gekoppelt bleiben. Die in diesem Fall passiv geschobenen oder gezogenen Räder 38, die im störungsfreien Betrieb eigentlich von den Traktionsmaschinen 20 rotiert werden, rotieren in diesem Fall den Rotor der Traktionsmaschine 20. Die Rotation des Rotors führt dazu, dass dieser ein sich änderndes Magnetfeld erzeugt. Hierdurch wird eine elektrische Spannung in der Statorwicklung der Traktionsmaschine 20 induziert.

Im Ergebnis führt dies dazu, dass der Gleichspannungs-Zwischenkreis 48 des gestörten Fahrzeugs 12 nach wie vor mit elektrischer Energie gespeist wird, obwohl die Versorgung über die Netzspannungsquelle 30 gestört ist oder auch gänzlich ausbleibt. Genauer gesagt erfolgt die Versorgung des Gleichspannungs-Zwischenkreises 48 nicht wie im störungsfreien Betrieb über die Netzspannungsquelle 30, sondern über die im Generatorbetrieb betriebenen Traktionsmaschinen 20. Das Bordnetzwerk 24 kann über den Gleichspannungs-Zwischenkreis 48 daraufhin nach wie vor mit elektrischer Energie versorgt werden, um die Hilfsbetriebefunktionen innerhalb des gestörten Fahrzeugs 12 zumindest teilweise aufrechtzuerhalten.

In diesem Zusammenhang kann ferner vorgesehen sein, dass der Motorstromrichter 46 derart betrieben wird, dass er den Gleichspannungs-Zwischenkreis 48 auf eine im Wesentlichen konstante vorgegebene Spannung regelt.

Ein detaillierter Betriebsablauf bei einer Störung des Fahrzeugs 12 kann in dem gezeigten Fall wie folgt lauten, wobei nicht sämtliche Schritte zwingend sind:
- Eine Störung der Versorgung über die Netzspannungsquelle 30 wird von der Steuereinrichtung 52 detektiert.
- Das gestörte Fahrzeug 12 wird optional in einen Steuerwagen-Betriebsmodus (d.h. in einen Steuerwagenbetrieb) geschaltet, insbesondere wenn es sich um das Fahrzeug 12, 14 handelt.
- Der Verbund 10 bzw. der Zug wird optional zu einem Stillstand gebracht, woraufhin die Schaltereinrichtungen 40 in dem gestörten Fahrzeug 12 geschlossen werden, falls sie sich in einem geöffneten Zustand befunden haben. Das zwischenzeitliche Öffnen der Schaltereinrichtungen 40 kann beispielsweise aus Sicherheitsgründen erforderlich sein und/oder kann ein einfaches steuerungstechnisches Überbrücken parallel einsetzender Sicherheitsmaßnahmen ermöglichen.
- Der Zug wird erneut beschleunigt, wobei die Fortbewegung über den nicht gestörten Fahrzeug 14 aufgebracht wird.
- Sobald eine vorbestimmte Mindestgeschwindigkeit erreicht ist, wird in dem gestörten Fahrzeug 12 der elektrische Bremsbetrieb aktiviert, was mit einem Aktivieren der vorstehend geschilderten Betriebszustände der Traktionsmaschine 20 und des Motorstromrichters 46 einhergeht.
- Mittels der Traktionsmaschinen 20 wird daraufhin elektrische Energie erzeugt und der Motorstromrichter 46 beginnt, den Gleichspannungs-Zwischenkreis 48 auf ein vorbestimmtes Spannungsniveau zu regeln.
- Sobald eine vorbestimmte Mindestspannung in dem Gleichspannungs-Zwischenkreis 48 erreicht ist (was über die Detektoreinrichtung 32 aus Figur 1C ermittelt werden kann), wird auch der Stromrichter 42 des Bordnetzwerks 24 aktiviert, um den Verbraucher 44 mit elektrischer Energie zu versorgen und die entsprechende Hilfsbetriebefunktion aufrechtzuerhalten.
- Optional können auch Kühlvorrichtungen des Motorstromrichters 46 des Antriebsnetzwerks 22 aktiviert werden, um dessen Betriebsfähigkeit zu gewährleisten.
- Der geschilderte Betriebszustand wird aufrechterhalten, solange eine Geschwindigkeit über einer vorbestimmten Deaktivierung-Mindestgeschwindigkeit vorliegt. Wird die Deaktivierungs-Mindestgeschwindigkeit unterschritten (zum Beispiel bei einem Anhalten an einer Haltestelle), wird der elektrische Bremsbetrieb und/oder der Motorstromrichter 42 deaktiviert, um eine weitere Entnahme elektrische Energie aus dem Gleichspannungs-Zwischenkreis 48 zu vermeiden. Hierdurch kann gewährleistet werden, dass der Gleichspannungs-Zwischenkreis 48 keine übermäßig negative Energiebilanz aufweist und eine gewisse Mindestspannung aufrechterhalten kann. Insbesondere wird hierdurch aber sichergestellt, dass die im Generatorbetrieb erzeugte elektrische Leistung ausreicht, um die Hilfsbetriebe mit einer benötigten Mindestmenge an elektrischer Energie zu versorgen.
- Wird die Deaktivierung-Mindestgeschwindigkeit erneut überschritten (zum Beispiel nach einem Anfahren von einer Haltestelle), kann der elektrische Bremsbetrieb und/oder der Motorstromrichter 42 wieder aktiviert werden, um die Hilfsbetriebefunktion des Verbrauchers 44 weiter betreiben zu können. Das geschilderte Aktivieren und Deaktivieren des elektrischen Bremsbetriebs und/oder des Motorstromrichters 42 kann beliebig oft wiederholt werden.

Lediglich beispielhaft wurde vorstehend von einer Störung des Fahrzeugs 12 ausgegangen, welche durch das weitere Fahrzeug 14 ausgeglichen wird. Es versteht sich, dass bei einer analogen Störung in dem Fahrzeug 14, das Fahrzeug 12 das Erzeugen der weiteren Fortbewegung übernehmen kann. Das Fahrzeug 14 würde dann in den vorstehend geschilderten elektrischen Bremsbetrieb geschaltet werden. Der genaue Ablauf kann dabei identisch zu den vorstehend geschilderten Verfahrensschritten sein. Zusammengefasst ist in dem gezeigten Ausführungsbeispiel somit vorgesehen, dass sich die Fahrzeuge 12, 14 im Falle einer Netzversorgungsstörung wechselseitig zum Aufrechterhalten ihrer Hilfsbetriebefunktionen unterstützen können.

Prinzipiell ist es aber auch möglich, dass zum Beispiel aufgrund der größeren Anzahl von Traktionsmaschinen 20 in dem Fahrzeug 14 nur dieses Fahrzeug 14 eine Störung in dem entsprechend anderen Fahrzeug 12 ausgleichen kann (d. h., nur das Fahrzeug 12 wäre dann in einem elektrischen Bremsbetrieb betreibbar, während das Fahrzeug 14 die Fortbewegung erzeugt). Bei einer Störung in des Fahrzeugs 14 müsste hingegen auf anderweitige Maßnahmen zurückgegriffen werden.

Alternativ kann auch lediglich eines der Fahrzeuge 12, 14 mit einem Antriebsnetzwerk 22 der geschilderten Art ausgebildet sein. Tritt in dem Gleichspannungszwischenkreis 48 dieses Fahrzeugs 12, 14 eine Störung auf, kann das andere Fahrzeug 12, 14 dies durch Erzeugen einer Fortbewegung ausgleichen, wobei er auch auf einen abweichenden Antriebsstrang zurückgreifen kann (z.B. einen Antriebsstrang enthaltend einen Dieselmotor).

Ein Vorteil der erfindungsgemäßen Lösung besteht insbesondere darin, dass selbst bei einer elektrischen Trennung der Fahrzeuge 12, 14 oder zumindest von deren Antriebsnetzwerken 22 (z.B. durch Weglassen der Verbindungsleitung 19 in Fig. 1B) ein Fahrzeug mit gestörter Energieversorgung sein Bordnetz und insbesondere seine Hilfsbetriebe weiterbetreiben und somit insbesondere die Verbraucher 44 weiter mit elektrischer Energie versorgen kann. Hierfür muss es lediglich in der geschilderten Weise von dem störungsfreien Fahrzeug 12, 14 gezogen oder geschleppt werden. Eine elektrische Verbindung zur Übertragung entsprechender elektrischer Energie zwischen den Fahrzeugen 12, 14 ist daher nicht erforderlich. Somit kann ein Verkabelungsaufwand zwischen den Fahrzeugen 12, 14 reduziert und beispielsweise die Verbindungsleitung 19 in Fig. 1B auch gänzlich weggelassen werden. Eine bevorzugte Ausgestaltung des Verbundes sieht aber eine Signalübertragung zwischen den Zugteilen und/oder Fahrzeugen insbesondere über eine Signalleitung vor. Alternativ oder zusätzlich kann eine Funkverbindung vorgesehen sein. Im dargestellten Ausführungsbeispiel kann daher eine Signalübertragungsleitung zwischen den Fahrzeugen 12, 14 vorhanden sein, oder zumindest zwischen Teilverbunden, die aus entsprechenden Fahrzeugen 12, 14 bestehen (siehe nachstehendes Beispiel gemäß Figur 2).

Auch in dem eingangs der Figurenbeschreibung geschilderten Fall eines Verbundes aus mehrere Teilverbunden, die jeweils die Fahrzeuge 12, 14 aus Fig. 1A umfassen, kann zwischen diesen Teilverbunden der Verkabelungsaufwand entsprechend gemindert werden. Erneut kann die Energieversorgung eines Teilverbundes im Störungsfall nämlich dadurch sichergestellt werden, dass dieser durch den anderen Teilverbund gezogen oder geschleppt wird. Hierfür muss nicht zwingenderweise elektrische Energie zwischen den Teilverbunden übertragen werden. Diese Variante wird nachstehend anhand von Figur 2 erläutert.

In Figur 2 sind drei zur Anordnung in Fig. 1A analoge Fahrzeuganordnungen bzw. - zusammenschlüsse gezeigt, die zu einem gesamten Verbund (Gesamtverbund) 100 miteinander gekoppelt sind. Genauer gesagt sind drei zur Figur 1A jeweils analoge Zusammenschlüsse aus zwei Fahrzeugen 12, 14 gezeigt, die jeweils einen Teilverbund 10A-C eines gesamten Verbundes 100 bilden. Der gesamte Verbund 100 (Gesamtverbund) besteht somit aus einer Mehrzahl von Fahrzeugen 12, 14, wobei einzelne dieser Fahrzeuge 12, 14 (jeweils zwei) untereinander als entsprechende Teilverbunde 10A-C zusammengeschlossen bzw. miteinander gekoppelt sind. Die Teilverbunde 10A-C können auch als (mehrteilige) Fahrzeuge des gesamten Verbundes 100 betrachtet werden.

In diesem Fall ist vorgesehen, dass Störungen hinsichtlich der Gleichspannungs-Zwischenkreisspeisung in einem oder in mehreren der Teilverbunde 10A-C durch wenigstens einen nicht gestörten Teilverbund 10A-C ausgeglichen werden. Analog zu dem vorigen Beispiel bringt der wenigstens eine nicht gestörte-Teilverbund 10A-C hierfür die Fortbewegungskraft für den gesamten Verbund 100 auf. Dabei ist es unerheblich, ob lediglich in einem oder aber in beiden Fahrzeugen 12, 14 eines der Teilverbunde 10A-C eine entsprechende Störung auftritt.

Als Beispiel sei von einer Störung der Speisung des Gleichspannungs-Zwischenkreises 48 in einem oder in beiden Fahrzeugen 12, 14 des mittleren Teilverbundes 10B ausgegangen. Bei einer Fahrtrichtung in Figur 2 nach rechts würde der rechte (d. h. in Fahrtrichtung vordere) Teilverbund 10C den gestörten mittleren Teilverbund 10B ziehen und der linke (d. h. in Fahrtrichtung hintere) Teilverbund 10A würde den mittleren Teilverbund 10B schieben. In dem oder in den gestörten Fahrzeug(en) 12, 14 des mittleren Teilverbundes 10B wird daraufhin in der vorstehend erläuterten Art ein Generatorbetrieb aktiviert und wird wenigstens einer der Gleichspannung-Zwischenkreise 48 auf diese Weise mit Strom versorgt.

In diesem Zusammenhang kann ferner vorgesehen sein, dass jeder der Teilverbunde 10A-C über wenigstens eine Steuereinrichtung 52 verfügt (vergleiche Figur 1B). Die Steuereinrichtung 52 kann dazu eingerichtet sein, Betriebsgrößen wie zum Beispiel eine Fahrgeschwindigkeit, Zugkraft, Antriebsleistung und/oder Traktionskraft von wenigstens einem der Fahrzeuge 12, 14 eines Teilverbundes 10A-C zu steuern oder zu regeln (insbesondere in Abhängigkeit des Auftretens einer Störung und/oder fahrsituativ). Gleiches gilt im Übrigen auch für die Steuereinrichtung 52 aus Fig. 1B, welche entsprechende Betriebsgrößen für ein jedes der Fahrzeuge 12, 14 fahrzeugspezifisch steuern oder regeln kann. Weiter kann vorgesehen sein, dass die Steuereinrichtungen 52 der einzelnen Teilverbunde 10A-C untereinander kommunizieren, zum Beispiel über eine über die Kupplungen zwischen den Teilverbunden 10A-C geführte Datenleitung.

Wird in einem der Teilverbunde 10A-C eine Störung festgestellt, kann er dies über die Datenleitung an die Steuereinrichtungen 52 der weiteren Teilverbunde 10A-C kommunizieren. Diese können daraufhin unter einer Steuerung ihrer Steuereinrichtungen 52 (also einer anderen Steuereinrichtung 52, als diejenige, die die Störung feststellt) zum Beispiel die erzeugte Antriebsleistung der jeweiligen nicht gestörten Teilverbunde 10A-C geeignet anpassen, um einen Fahrgeschwindigkeitsabfall zu vermeiden. Zusätzlich oder alternativ kann auch die Zugkraft angepasst werden und insbesondere fahrsituativ angepasst werden. Dies kann zum Beispiel in der Form erfolgen, dass bei einem Ausfall des mittleren Teilverbundes 10B eine Zugkraft des vorderen Teilverbundes 10C zumindest dann begrenzt wird, wenn der hintere Teilverbund 10A bremst oder eine abfallende Antriebsleistung erzeugt. Dies verhindert, dass der mittlere Teilverbund 10B unzulässig stark mechanisch belastet wird und insbesondere, dass entgegengesetzt darauf einwirkende Zugkräfte unzulässig hoch ausfallen. Mit anderen Worten können die von dem vorderen und hinteren Teilverbund 10A, 10C auf den mittleren Teilverbund 10B einwirkenden und gegebenenfalls entgegengesetzt ausgerichteten Zugkräfte somit begrenzt werden.

## Patentansprüche

1. Verbund (10, 100) aus wenigstens zwei Fahrzeugen (12, 14), die jeweils wenigstens einen Schienenfahrzeug-Zugteil umfassen, wobei zumindest ein erstes Fahrzeug (12, 14) folgendes umfasst:
- einen aus einer Energiequelle mit elektrischer Energie speisbaren Gleichspannungs-Zwischenkreis (48), an den zumindest ein Motorstromrichter (46) angeschlossen ist, der wiederum mit zumindest einer Traktionsmaschine (20) elektrisch verbunden ist; und
- ein mit dem Gleichspannungs-Zwischenkreis (48) elektrisch verbundenes oder verbindbares Bordnetzwerk (24) zur Versorgung wenigstens eines elektrischen Verbrauchers (44) des ersten Fahrzeugs (12, 14);
wobei der Verbund (10) ferner wenigstens eine Steuereinrichtung (52) umfasst, die dazu ausgebildet ist, folgende Maßnahmen durchzuführen:
- Feststellen einer Störung der Speisung des Gleichspannungs-Zwischenkreises (48) des ersten Fahrzeugs (12, 14);
- Aktivieren eines Generatorbetriebs der zumindest einen Traktionsmaschine (20) oder wenigstens einer der Traktionsmaschinen (20).

2. Verbund (10, 100) nach Anspruch 1,
wobei eine für den Generatorbetrieb aktivierte Traktionsmaschine (20) als eine permanentmagneterregte Traktionsmaschine ausgebildet ist.

3. Verbund (10, 100) nach einem der vorangehenden Ansprüche,
wobei der Motorstromrichter (46) im Generatorbetrieb einer für den Generatorbetrieb aktivierten Traktionsmaschine (20) dazu eingerichtet ist, den Gleichspannungs-Zwischenkreis (48) auf eine vorgegebene und vorzugsweise auf eine im Wesentlichen konstante Spannung zu regeln.

4. Verbund (10, 100) nach einem der vorangehenden Ansprüche,
wobei wenigstens das erste Fahrzeug (12, 14) eine Schaltereinrichtung (40) umfasst, insbesondere wobei die Steuereinrichtung (52) dazu eingerichtet ist, die Schaltereinrichtung (40) infolge des Feststellens der Störung (22) in einem stromleitenden Zustand zu betreiben.

5. Verbund (10, 100) nach einem der vorangehenden Ansprüche,
wobei das Bordnetzwerk (24) einen Stromrichter (42) umfasst, der vorzugsweise zwischen den Gleichspannungs-Zwischenkreis (48) und den elektrischen Verbraucher (44) geschaltet ist.

6. Verbund (10, 100) nach Anspruch 5,
wobei der Stromrichter (42) des Bordnetzwerks (24) erst dann aktiviert wird, wenn ein vorbestimmtes Kriterium bezüglich des Zustandes des Gleichspannungs-Zwischenkreises (48) erfüllt ist, insbesondere das Erreichen einer vorbestimmten Gleichspannungs-Zwischenkreisspann ung.

7. Verbund (10, 100) nach einem der vorangehenden Ansprüche,
wobei der Generatorbetrieb erst dann aktiviert wird, wenn ein vorbestimmtes Kriterium bezüglich der Geschwindigkeit erfüllt ist, insbesondere das Erreichen einer vorbestimmten Mindestgeschwindigkeit.

8. Verbund (10, 100) nach einem der vorangehenden Ansprüche,
wobei nach einem Aktivieren des Generatorbetriebs und bei Erfüllen eines vorbestimmten Kriteriums der Generatorbetrieb zumindest temporär wieder deaktiviert wird, insbesondere wobei das Kriterium das Unterschreiten einer vorbestimmten Mindestgeschwindigkeit betrifft.

9. Verbund (10, 100) nach einem der vorangehenden Ansprüche,
wobei die Steuereinrichtung (52), eine andere Steuereinrichtung (52) des Verbundes (10, 100) oder eine Traktions-Steuereinrichtung dazu ausgebildet ist, eine Fortbewegung des Verbundes (10, 100) durch ein anderes als das gestörte Fahrzeug (12, 14) zu steuern.

10. Verbund (10, 100) nach einem der vorangehenden Ansprüche,
wobei die Steuereinrichtung (52), eine andere Steuereinrichtung (52) des Verbundes (10, 100) oder eine Traktions-Steuereinrichtung dazu eingerichtet ist, wenigstens eine Betriebsgröße von Fahrgeschwindigkeit, Antriebsleistung, Zugkraft und Traktionskraft des anderen Fahrzeugs (12, 14) in Reaktion auf das Feststellen der Störung anzupassen.

11. Verfahren zum Speisen eines elektrischen Bordnetzwerks (24) in einem Verbund (10) aus wenigstens zwei Fahrzeugen (12, 14), die jeweils wenigstens einen Schienenfahrzeug-Zugteil umfassen, wobei zumindest ein erstes Fahrzeug (12, 14) folgendes umfasst:
- einen aus einer Energiequelle mit elektrischer Energie speisbaren Gleichspannungs-Zwischenkreis (48), an den zumindest ein Motorstromrichter (46) angeschlossen ist, der wiederum mit zumindest einer Traktionsmaschine (20) verbunden ist; und
- ein mit dem Gleichspannungs-Zwischenkreis (48) elektrisch verbundenes oder verbindbares Bordnetzwerk (24) zur Versorgung wenigstens eines elektrischen Verbrauchers (44) des ersten Fahrzeugs (12, 14);
wobei das Verfahren folgendes umfasst:
- Feststellen einer Störung der Speisung des Gleichspannungs-Zwischenkreises (48) des ersten Fahrzeugs (12, 14);
- Erzeugen einer Fortbewegung durch ein Fahrzeug (12, 14), das nicht das erste Fahrzeug (12, 14) ist;
- Aktivieren eines elektrischen Generatorbetriebs der Traktionsmaschine (20).

12. Verfahren nach Anspruch 11,
ferner umfassend den Schritt:
- Aktivieren eines Stromrichters (42) des Bordnetzwerks (24) erst dann, wenn ein vorbestimmtes Kriterium bezüglich des Zustandes des Gleichspannungs-Zwischenkreises (48) erfüllt ist, insbesondere das Erreichen einer vorbestimmten Gleichspannungs-Zwischenkreisspannung.

13. Verfahren nach Anspruch 11 oder 12,
wobei bei oder nach dem Feststellen der Störung der elektrische Generatorbetrieb als Generatorbetrieb der als permanentmagneterregte Traktionsmaschine (20) ausgebildeten Traktionsmaschine (20) aktiviert wird.

14. Verfahren nach einem der Ansprüche 11 bis 13,
wobei wenigstens eine Betriebsgröße von Fahrgeschwindigkeit, Antriebsleistung, Zugkraft und Traktionskraft des die Fortbewegung erzeugenden Fahrzeugs (12, 14) in Reaktion auf das Feststellen der Störung angepasst wird.
